# EUROPEAN PATENT APPLICATION

(11) **EP 3 907 657 A1**
(43) Date of publication of application: **10.11.2021**
(21) Application number: 21172863.9
(22) Date of filing: 07.05.2021
(51) Int. Cl.: G06K 9/00, G06K 9/32

(54) **A DIGITAL MEDIA FRAME AND METHOD FOR CONFIGURING A FIELD OF VIEW OF A DIGITAL MEDIA FRAME**

(30) Priority: 08.05.2020 US 202016870233
(71) Applicant: Creedon Technologies HK Limited, Sheung Wan Hong Kong (HK)
(72) Inventor: Chan, Kei Lun, Bristol BS16 7HN (GB); Fergusson, David John, Hong Kong (HK); Lor, Ian Sheng, Hong Kong (HK); Marsden, John, Trowbridge BA14 7GD (GB); Dudar, Marcin Wojciech, Hong Kong (HK); Palfreeman, Mark Creedon, Hong Kong (HK); O'Kelly, Peter Aidan, Angeles City (PH); Walsh, Steven Mark, Hong Kong (HK)
(74) Representative: FRKelly

(57) **Abstract**

A method for configuring a field of view of a digital media frame. The method comprises analysing a digital image to identify at least one first portion of the digital image having a first predetermined characteristic. Determining an optimum location within the field of view. Positioning the identified at least one first portion of the digital image within the optimum location.

## Description

### FIELD OF THE INVENTION

The present invention relates to a digital media frame and a method for configuring a field of view of a digital media frame. In particular but not exclusively, the present invention relates to prioritising the location of identified preferential image data on a display of a digital media frame.

### BACKGROUND OF THE INVENTION

Digital media frames are well known in the art and are often referred to as a digital photo frames. A digital media frame is a standalone picture frame that displays digital photographs without requiring the input of a computing device. Digital media frames existed prior to the development of tablet computers, smart phones and the like. Generally, digital media frames are designed specifically for the display of stationary photographs and may be affixed to a wall or have a stand for resting on a surface.

Digital media frames known heretofore have a range of features. For example, some have the ability to play videos as well as display photographs. Some digital media frames may be Wi-Fi enabled. Some utilise cloud storage and/ or have a Universal Serial Bus (USB) port or have a hub for receiving memory cards.

Digital media frames typically allow the display of pictures directly from a camera's memory card, and may provide internal memory storage. Some allow users to upload pictures to the frame's memory via a USB connection, or wirelessly via Bluetooth technology. Others include support for wireless connections or use cellular technology to upload from a mobile or desktop application to transfer and share files. Some frames allow photos to be shared from a frame to another. Digital media frames may have applications which support the loading of digital images over the Internet. Audio speakers may be provided for playing video content with sound.

The aspect ratio of digital media frames varies. Typical aspect ratios may include 1: 1, 3:2, 16:9, and 4:3. Photographs sometimes do not exactly fit the aspect ratio of the digital media frame may have to be stretched, cropped, or made smaller in order to fit within the field of view of the display screen of the digital media frame. These actions may result in the displayed photograph missing desirable information, focussing on the wrong information or look empty or distorted. These problems can be addressed by preselecting a digital media frame having an aspect ratio that corresponds to the aspect ratio of the camera and/or by altering the aspect ratios of the photographs prior to being transferred to the digital media frame. Alternatively, these problems are commonly addressed by manipulating or repositioning the digital photographs to fit the aspect ratio of the screen in a mode known in the art as 'fit to screen' or by filling the screen with a cropped portion of the photograph in a mode known in the field as 'fill screen'. However, in these modes desirable segments of the photograph may no longer be visible or incorrectly positioned on the display.

It is thus desirable to provide a digital media frame and a method for configuring a field of view of a digital media frame which addresses at least some of the drawbacks of the prior art.

### SUMMARY

According to a first aspect of the invention there is provided a method for configuring a field of view of a digital media frame; the method comprising
analysing a digital image to identify at least one first portion of the digital image having a first predetermined characteristic;
determining an optimum location within the field of view; and
positioning the identified at least one first portion of the digital image within the optimum location.

In one aspect there is provided in at least one mode of the digital media frame at least one second portion of the digital image being located outside the field of view.

In another aspect, the method further comprises cropping the at least one second portion while retaining the at least one first portion.

In an exemplary arrangement, the method further comprises applying an image processing algorithm to the digital image to identify the first predetermined characteristic.

Advantageously, the image processing algorithm is configured for facial detection. Preferably, the first predetermined characteristic comprises facial data. In one example, the facial data comprises at least one of eyes, mouth, hair, ears, and nose.

In one aspect, the optimum location is selected with respect to at least one set of coordinates within the field of view. Advantageously, the at least one set of coordinates corresponds to the centre of the field of view.

In a further aspect, the at least first portion is positioned with respect to the centre of the field of view.

In another aspect, the method further comprises applying at least one predefined display protocol.

In one aspect, the at least one predefined display protocol comprises a group protocol wherein a plurality of faces are identified in a digital image; and the optimum position is selected with respect to the identified plurality of faces.

In another aspect, a centre of the group of faces is identified and the photograph is displayed such that the centre of the group of faces corresponding to the centre of the field of view. Advantageously, wherein the centre of the group of faces is identified using a triangulation technique.

In a further aspect, the at least one predefined display protocol provides instructions for displaying a series of photographs on tile spaces within the field of view. Advantageously, two or more photographs are displayed on the tile spaces without overlapping a portion of one photograph containing facial data with a portion of another photograph to minimise the occlusion of faces.

In another aspect, there is provided a digital media frame comprising:
a processor;
a visual display screen;
memory comprising instructions which, when executed, cause the processor to
   analyse a digital image to identify at least one first portion of the
digital image having a first predetermined characteristic;
   determine an optimum location within the field of view; and
   position the identified at least one first portion of the digital image within the optimum location.

In one aspect, the digital media frame comprises at least two display modes. Advantageously, one of the display modes is a portrait mode and the other one is a landscape mode. In an exemplary aspect, in the landscape mode at least one second portion of the digital image is located outside the field of view. Preferably, the at least one second portion is cropped while the at least one first portion is retained.

In another aspect, the processor is configured to apply an image processing algorithm to the digital image to identify the first predetermined characteristic.

In a further aspect, wherein the image processing algorithm is configured for facial detection.

In a third aspect there is provided a networked device comprising:
a communication module;
a processor;
a visual display screen;
memory comprising instructions which, when executed, cause the processor to analyse a digital image to identify at least one first portion of the
digital image having a first predetermined characteristic;
   determine an optimum location within the field of view; and
   position the identified at least one first portion of the digital image within the optimum location.

In a further aspect, the networked device may analyse the images remotely and apply meta data to the photographs to allow for configuration of field of view to be done independently.

In a fourth aspect, there is provided a computer program product for configuring a field of view of a digital media frame, the computer program product disposed on a non-transitory computer readable medium, the computer program product including computer program instructions that, when executed, cause a computer to carry out the steps of:
analysing a digital image to identify at least one first portion of the digital image having a first predetermined characteristic;
determining an optimum location within the field of view; and
positioning the identified at least one first portion of the digital image within the optimum location.

In a fifth aspect, there is provided a method for configuring a field of view of a display; the method comprising
analysing a digital image to identify at least one first portion of the digital image having a first predetermined characteristic;
determining an optimum location within the field of view; and
positioning the identified at least one first portion of the digital image within the optimum location.

In a sixth aspect, there is provided a visual display unit comprising:
a processor;
a visual display screen;
memory comprising instructions which, when executed, cause the processor to
   analyse a digital image to identify at least one first portion of the digital image having a first predetermined characteristic;
   determine an optimum location within the field of view; and
   position the identified at least one first portion of the digital image within the optimum location.

In a seventh aspect there is provided a digital media frame platform comprising:
an image processing module provided on a cloud for identifying at least one first portion of a uploaded digital image having a predetermined characteristic;
a placement calculation module provided on the cloud for determining an optimum location within a field of view;
wherein the placement calculation module is in communication with a digital media frame for controlling a visual display of the digital media frame such that the identified at least one first portion of the digital image is positioned within the optimum location.

In another aspect, identified predetermined characteristics are stored as characteristic metadata on the cloud and are accessible by the placement calculation module for calculating the optimum location.

In a further aspect, the placement calculation module is configured to identify setup information of the digital media frame.

In one aspect, the placement calculation module communicates with the digital media frame for extracting setup information stored locally on the digital media frame.

In a further aspect, the setup information is stored on the cloud as setup metadata and is accessible by the placement calculation module for calculating the optimum location.

In one aspect, a user interface allows a user to select display preferences which are stored as user feedback metadata and stored on the cloud; the user feedback metadata is accessible by the placement calculation module for calculating the optimum location.

In a further aspect, the image analysis module is configured to identify night scene characteristics.

In another aspect, the placement calculation module is configured to determine external environmental factors obtained from the setup information of the digital media frame.

In an exemplary aspect, the external environmental factors comprise room light level data. Advantageously, the placement calculation module is configured to prioritise the display of image data containing a night scene over image data containing a daytime scene or vice versa based on the room light level data.

### BRIEF DESCRIPTION OF THE DRAWINGS

Figures 1 to 3 are illustrations of a prior art digital media frame.
Figure 4 is a block diagram of a digital media frame in accordance with the present teaching.
Figures 5 to 6 show details of the digital media frame of Figure 4.
Figure 7 is a flow chart showing exemplary functions of the digital media frame of Figure 4.
Figure 8 is a flow chart showing further exemplary functions of the digital media frame of Figure 4.
Figures 9-12 shows another digital media frame which is also in accordance with the present teaching.
Figures 13-15 shows another digital media frame which is also in accordance with the present teaching.
Figure 16 is a flow chart showing exemplary functions of the digital media frame of Figure 15.
Figure 17A-17C shows another digital media frame which is also in accordance with the present teaching.
Figure 18A-18C shows another digital media frame which is also in accordance with the present teaching.
Figure 19 illustrates an exemplary system for configuring a field of view of a digital media frame which is also in accordance with the present teaching.
Figure 20 illustrates an exemplary image processing system which is also in accordance with the present teaching.
Figure 21 illustrates an exemplary method implemented by the image processing system of Figure 20.

### DETAILED DESCRIPTION OF THE DRAWINGS

The present teaching will now be described with reference to some exemplary digital media frames and methods for configuring a field of view thereof. It will be understood that the exemplary methods and digital media frames are provided to assist in an understanding of the present teaching and are not to be construed as limiting in any fashion. Furthermore, elements or components that are described with reference to any one Figure may be interchanged with those of other Figures or other equivalent elements without departing from the spirit of the present teaching.

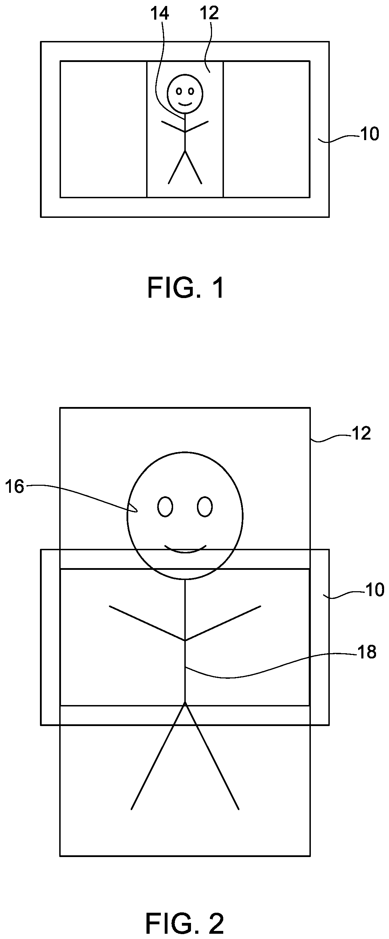

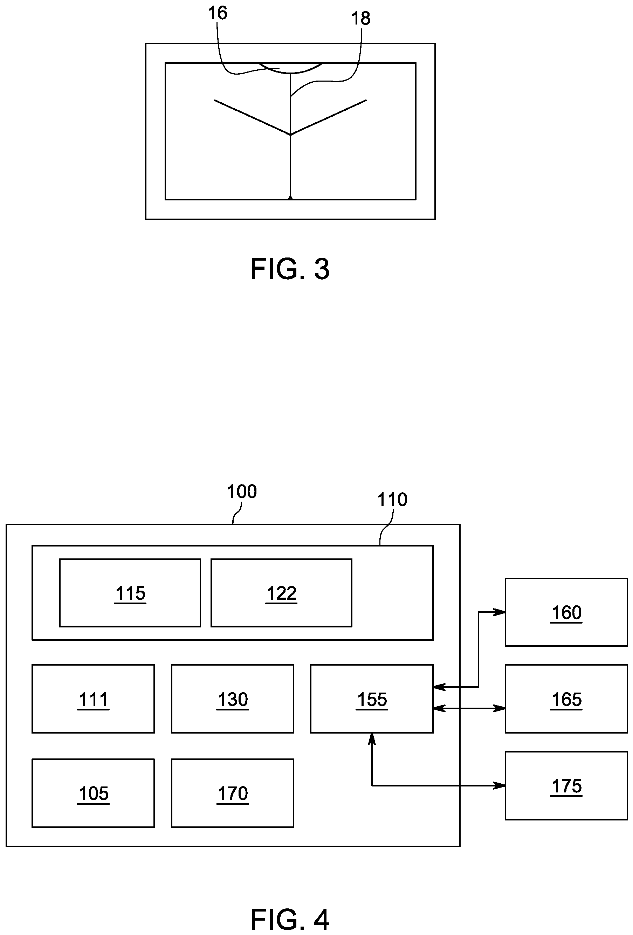

Referring initially to Figures 1 to 3, there is illustrated a prior art digital media frame 10 having a landscape aspect ratio device showing a portrait photograph 12 of a person 14. The digital media frame 10 is using a display mode called 'Fit to Screen' where the photograph 12 is scaled down so that it is fully visible within the display. In Figure 2, the display mode of the device 10 is set to 'Fill Screen'. In this case the photograph 12 is enlarged so that the screen is filled - in this case the width of the photograph 12 dictates that some of the photograph 12 is cropped. Figure 3 shows what the user sees on the screen. The resulting photograph 14 is cropped such that the face 16 is removed while the torso 18 of the person 14 is retained. The display of photographs with missing faces is typically not desirable by users.

Referring to Figures 4 to 8 there is illustrated a digital media frame 100 in accordance with the present teaching. The digital media frame 100 comprises a processor/processing means 105 in communication with memory 110. The processor 105 functions to execute software instructions that can be loaded and stored in the memory 110. One or more software modules may be encoded in the memory 110. The software modules may comprise one or more software programs or applications having computer program code or a set of instructions configured to be executed by the processor 105. Such computer program code or instructions may be written in any combination of one or more programming languages. The problem of not displaying desirable portions of a photograph is addressed by the digital media frame 100. In the digital media frame 100 an image processing algorithm is applied to the digital image 12 to identify desirable portions of the image which are to be displayed. For example, facial data is identified and the photograph is positioned such that that facial data visibility is prioritised on the screen 111. In the exemplary embodiment, an image processing application 115 applies the image processing algorithm to the digital image 12 to identify the first predetermined characteristic. In the exemplary embodiment, the image processing algorithm is configured for facial detection. The first predetermined characteristic may comprise facial data. Facial data may comprise at least one of eyes, mouth, hair, ears, and nose. It will be appreciated that it is not intended to limit the present teaching to facial data of humans in that it is envisaged that characteristics of animals or objects may also be determined when determining a portion of a photograph to be displayed in the optimum position of the field of view.

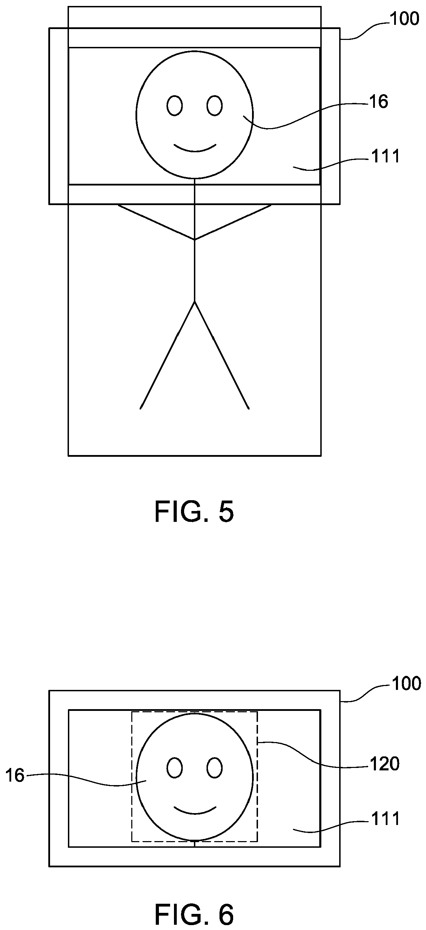

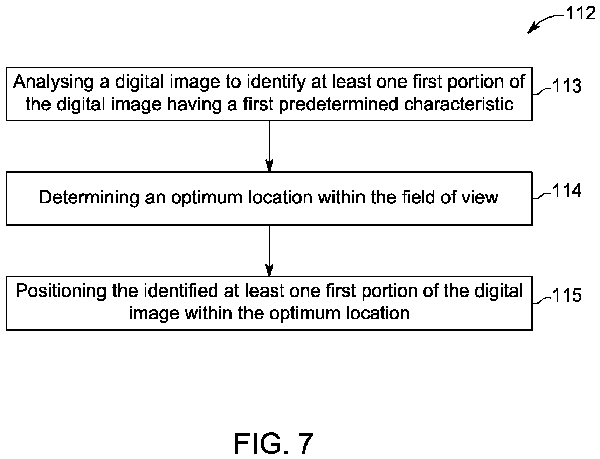

Exemplary steps carried out by the image processing application 115 are illustrated in the flow chart 112 of Figure 7. The image processing application 115 uses image analysis to analyse the digital image 12 on the digital media frame 100 to identify at least one first portion of the digital image having a first predetermined characteristic; step 113. The image processing application 115 determines an optimum location within the field of view of the screen 111; step 114. The identified first portion of the digital image is positioned within the optimum location, step 115. In the exemplary embodiment the first portion of the image is a face 16. In the exemplary embodiment the optimum location corresponds to a central area 120 on the display screen 111 as best illustrated in figure 6. The face 16 of the person 14 in the digital image 12 is positioned within the central area 120, step 215. In at least one mode of the digital media frame at least one second portion of the digital image 12 is located outside the field of view such as a portion of the torso 18. The torso portion of the person 14 may be cropped while the face 16 is retained for displaying on the screen 111.

Image analysis will be understood to entail a multitude of techniques known to one skilled in the art, including but not limited to one or more of Machine Learning Model Inference, digital signal processing and Fourier analysis. A detecting and classification means 122 may be provided such as a software application for detecting specific features of an image; it will be understood that this may entail edge detection software; one or more machine learning techniques such as deep learning algorithms implementing neural networks; pattern recognition, scene detection, image classification, feature extraction and face/feature detection. Machine Learning engines including but not limited to TensorFlow, PyTorch, MXNet can be used to apply inference techniques from pre-trained models to build up a comprehensive profile of information for each image analysed including but not limited to location of objects, faces, pets, group photos, scene classification, horizon detection. Inference can be performed remotely in the cloud as well as locally on the digital media frame device. The image profile is stored as metadata to accompany each image.

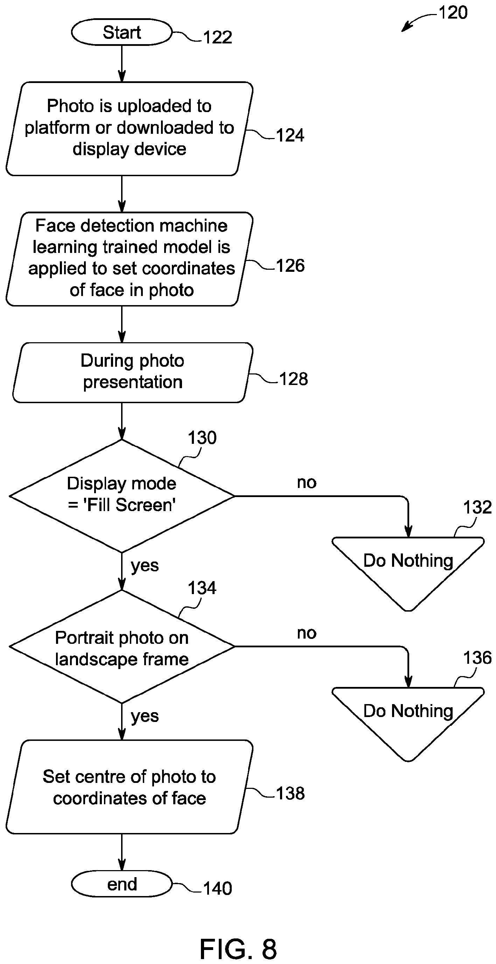

Referring to the flow chart 120 of Figure 8 which illustrates further exemplary operations of the digital media frame 100. The process is initiated in step 122. A digital photograph 124 is uploaded to the digital media frame 100. The image processing application 115 applies a face detection machine learning algorithm to identify a set of coordinates corresponding to the face 16, step 128. A user can select one of a number of available display modes, step 128. The user selects the 'Fill Screen' display mode, step 130. In this mode, there is no need to alter the photograph, step 132. In step 134 the user selects a portrait photograph on a landscape frame. If the facial data is retained there is no need to alter the photograph, step 136. If the facial data is outside the field of view of the screen 111, the centre of the photograph 14 is positioned to correspond to the coordinates of the facial data, step 138. The photograph is displayed on the screen 111 with the face 16 visible and the process ends, step 140. The optimum location may be selected with respect to at least one set of coordinates within the field of view. In the example of Figure 8 the at least one set of coordinates corresponds to the centre of the field of view. However, it will be appreciated that the set of coordinates may correspond to other areas of the field of view which may or may not include the centre of the field of view and may be based on user preferences on how they wish the image to be displayed.

It will be appreciated that the digital media frame 100 comprises the processor 105; a visual display screen 111; memory 110 comprising instructions which, when executed, cause the processor 105 to analyse the digital image 14 to identify at least one first portion of the digital image having a first predetermined characteristic; determine an optimum location 120 within the field of view; and position the identified first portion of the digital image 12 within the optimum location 120. The processor 105 may include a number of processors, a multiprocessor core, or some other type of processor, depending on the particular implementation. The memory 110 may be accessible by the processor 105, thereby enabling the processor 105 to receive and execute instructions stored on the memory 110. The memory 110 may be, for example, a random access memory (RAM) or any other suitable volatile or non-volatile computer readable storage medium. In addition, the memory 110 may be fixed or removable and may contain one or more components or devices such as a hard drive, a flash memory, a rewritable optical disk, a rewritable magnetic tape, or some combination of the above. Other information and/or data relevant to the operation of the digital media player 100 such as a database 130 may also be stored on the memory 110. The database 130 may contain and/or maintain various data items and elements that are utilized throughout the various operations of the digital media frame 100 and the method for configuring a field of view of the digital media player 100. It should be noted that although the database 130 is depicted as being configured locally to the digital media frame 100, in certain implementations the database 130 and/or various other data elements stored therein may be located remotely. Such elements may be located on a remote device or server - not shown, and connected to the digital media frame 100 through a network in a manner known to those skilled in the art, in order to be loaded into a processor and executed. Further, the program code of the software modules and one or more computer readable storage devices (such as the memory 110) form a computer program product that may be manufactured and/or distributed in accordance with the present disclosure, as is known to those of skill in the art.

The digital media frame 100 may include a communication means 155 operatively connected to the processor 105 and may be any interface that enables communication between the digital media frame 100 and other devices, machines and/or elements. The communication means 155 is configured for transmitting and/or receiving data from remote databases 160 and/or servers 165. For example, the communication means 155 may include but is not limited to a Bluetooth, or cellular transceiver, a satellite communication transmitter/receiver, an optical port and/or any other such, interfaces for wirelessly connecting the computing device 100 to the other devices. Thus the digital media frame 100 may be a networked device operable to communicate over the internet and/or to other networked devices.

A user interface 170 is also operatively connected to the processor 105. The user interface 170 may comprise one or more input device(s) such as switch(es), button(s), key(s), and a touchscreen. The user interface 170 functions to facilitate the capture of commands from the user such as on-off commands or settings related to operation of the digital media frame.

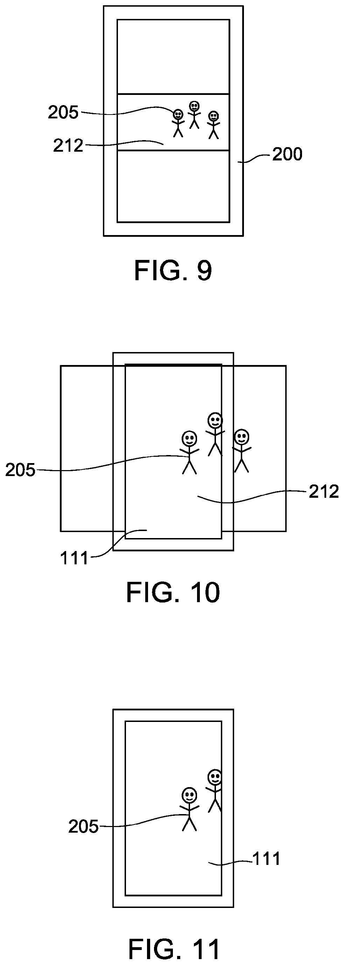

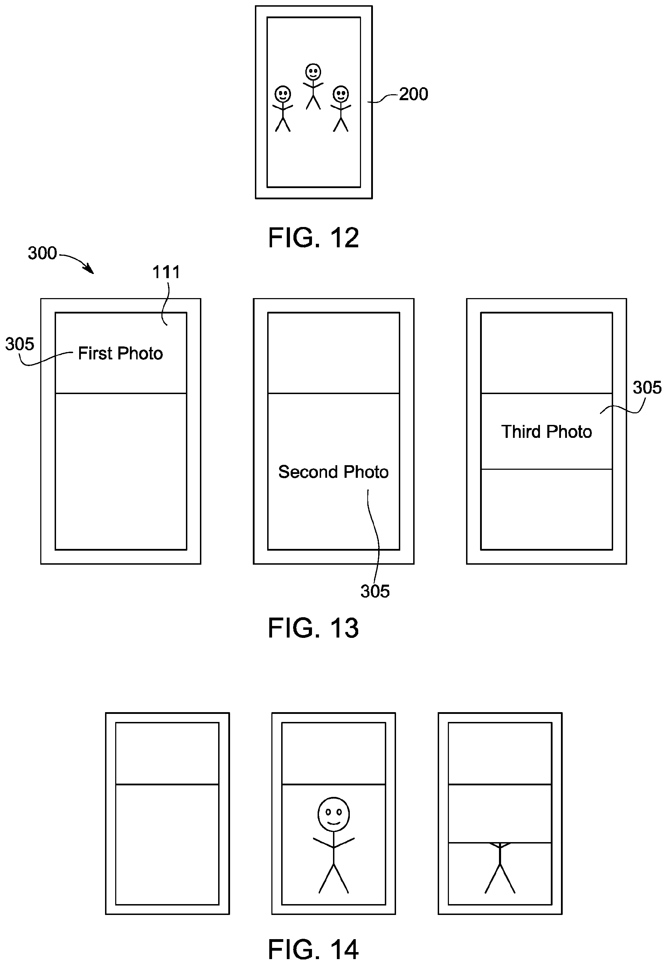

The processor 105 may be further operationally associated with one or more external devices. The one or more external devices may include but are not limited to an image capture device 175 such as a digital camera or smart phone or the like. Data may be transmitted to and/or from these external devices. Data from these external devices may be processed by the processor 105 implementing one or more of the software packages stored in memory 110. Data from the external devices may be stored in memory 110. Instructions such as predefined protocols stored in memory 110 may be sent to the external devices via the processor 105. Referring to Figures 9 to 12, there is illustrated another digital media frame 200 which is also in accordance with the present teaching. The digital media frame 200 operates substantially similar to the digital media frame 100 with the exception that the image processing application 115 is configured to cater for group photographs. Figure 9 shows what this would look like in 'Fit to Screen' mode where a group of people 205is not centred in the photograph 212. If this is presented on a portrait frame in the 'Fill Screen' mode, the photograph 212 can be cropped where the key focus of the photograph 212 - which is the group of people 212 are only partially visible on the screen 113 as graphically illustrated in Figures 10 and 11 where one and half members of the group are occluded from the field of view. Applying a modified version of the algorithm articulated in Figure 8, where image processing application 115 centres the photograph on the central triangulation of the group face coordinates. The resulting display presentation would be as depicted in Figure 12. It will be appreciated that the digital media frame 200 has an associated group display protocol wherein a plurality of faces are identified in a digital image; and the optimum position is selected with respect to the identified plurality of faces. In the exemplary embodiment, a centre of the group of faces is identified and the photograph is displayed such that the centre of the group of faces corresponds to the centre of the field of view as best illustrated in Figure 12. The centre of the group of faces is identified using a triangulation technique.

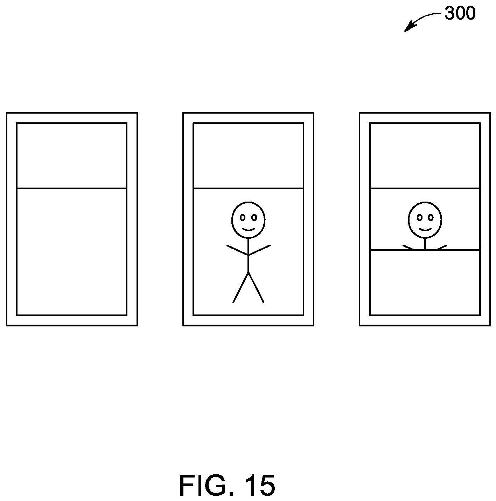

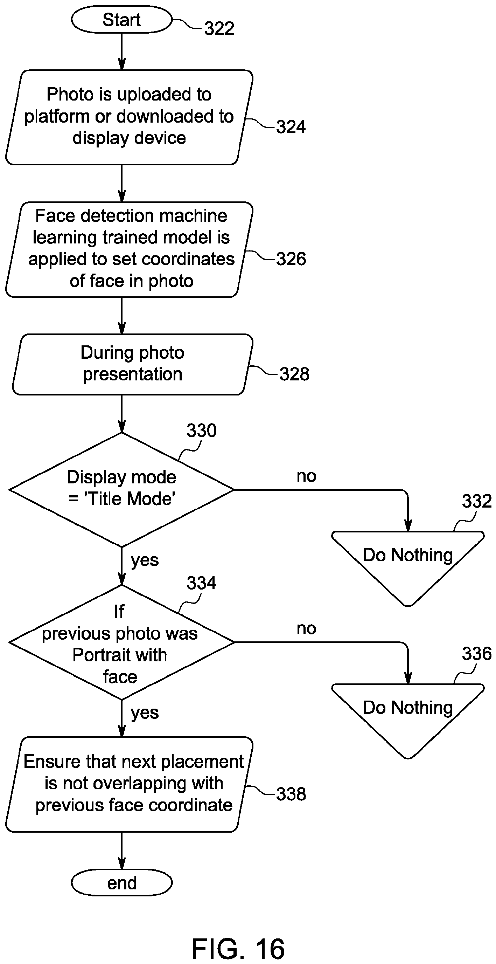

Referring now to Figures 13 to 15, there is illustrated another digital media frame 300 which operates in a tile mode. The tile mode presents photographs on tile spaces 305 on the display screen 111. The tile space is typically chosen randomly as shown in Figure 13. In this embodiment the second photograph is a portrait photograph of a person, the result would be as shown in Figure 14. Based on the algorithm in Figure 16, the present inventors ensure that overlapping photographs having facial data rarely occurs and instead the user will see a transition as depicted in Figure 15. The image processing application 115 may be configured to implement the exemplary operations as illustrated in the flow chart of Figure 16. The process is initiated in step 322. A digital photograph is uploaded to the digital media frame 300, step 324. The image processing application 115 applies a face detection machine learning algorithm to identify a set of coordinates corresponding to the face 16, step 326. A user can select one of a number of available display modes, step 328. The user selects the 'Tile mode' display mode, step 330. In this mode, there is no need to alter the photographs if there is no overlap of photographs on the tile spaces, step 332. In step 334 the processor checks if the previous photograph was a portrait with facial data. If there is no overlap of facial data, no action is needed, step 336. Step 338 ensures that the next photograph placement does not overlap facial data in a previous photograph as illustrated in Figure 16. It will be appreciated that the digital media frame 300 has an associated predefined display protocol which provides instructions for displaying a series of photographs on tile spaces within the field of view of the screen 111. The protocol ensures that two or more photographs are displayed on the tile spaces without overlapping a portion of one photograph containing facial data with a portion of another photograph to minimise the occlusion of faces.

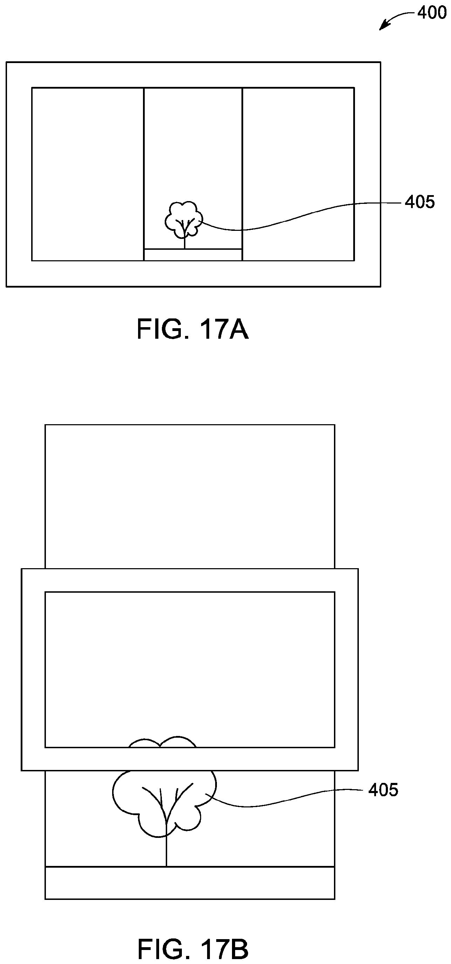

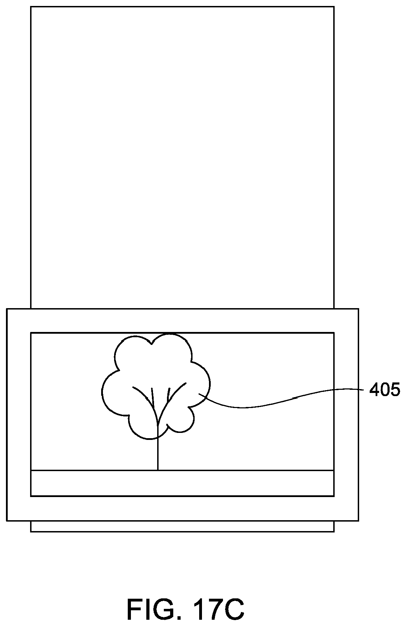

Referring to Figures 17A to 17C, there is illustrated another digital media frame 400 which is also in accordance with the present teaching. The digital media frame 400 operates substantially similar to the digital media frame 100 with the exception that the image processing application 115 is configured to analyse scene aspects of the image instead of objects such as facial data. In the exemplary embodiment, the horizon of a scene is detected 405 which is provided by way of example, and it is not intended to limit the present teaching to any particular object. Other prioritisation could be applied to preferred objects such as cars, mountains, pets, horizons, and the like. Figure 17A shows a landscape frame displaying an image with the horizon positioned low on the image 405 in 'Fit to Screen' mode. If the photograph is displayed on a portrait frame in the 'Fill Screen' mode, the photograph can be cropped and the key element of the photograph - which is the horizon 405 is not visible on the screen 113 as graphically illustrated in Figures 17B. By applying a modified version of the algorithm articulated in Figure 8, the image processing application 115 identifies the location of the horizon 405 so that it is positioned centrally in the field of view as illustrated in Figure 17C. Otherwise the operation the digital media frame 400 is substantially similar the digital media frame 100.

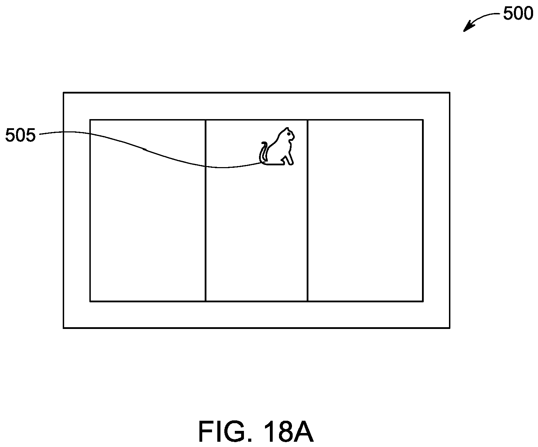

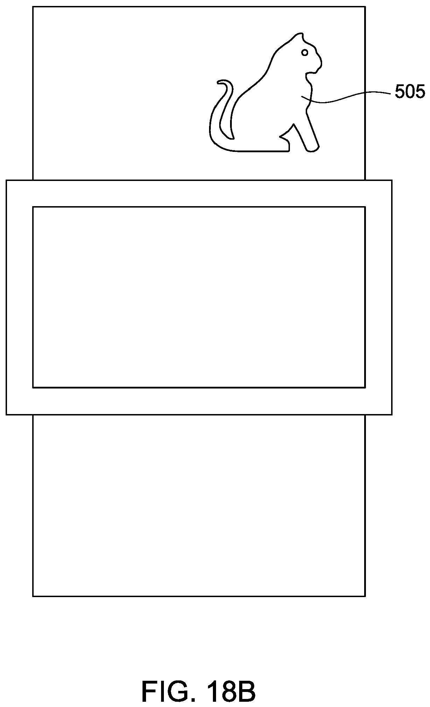

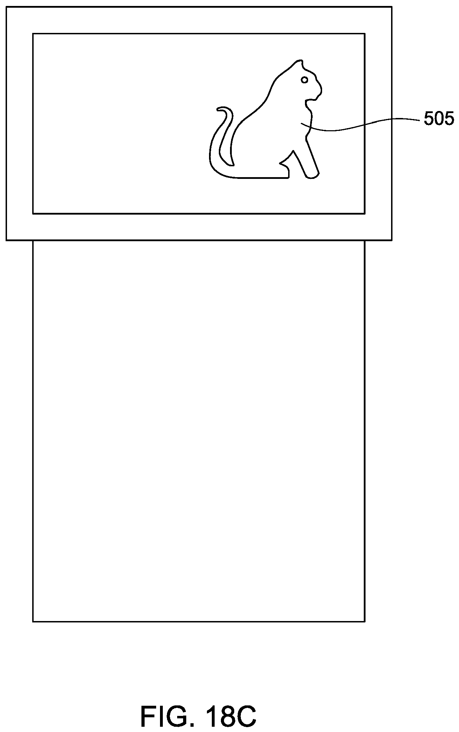

Referring to Figures 18A to 18C, there is illustrated another digital media frame 500 which is also in accordance with the present teaching. The digital media frame 500 operates substantially similar to the digital media frame 100 with the exception that the image processing application 115 is configured to analyse characteristic of objects instead of facial data. In the exemplary embodiment, the object is a cat 505 which is provided by way of example, and it is not intended to limit the present teaching to any particular object. Figure 18A shows a landscape frame displaying an image of a horizon containing the cat 505 in 'Fit to Screen' mode. If the photograph is displayed on a portrait frame in the 'Fill Screen' mode, the photograph can be cropped and the key element of the photograph - which is the image of the cat 405 is not visible on the screen 113 as graphically illustrated in Figures 18B. By applying a modified version of the algorithm articulated in Figure 8, the image processing application 115 identifies characteristics of the cat 505 so that it is positioned centrally in the field of view as illustrated in Figure 18C. Otherwise the operation the digital media frame 400 is substantially similar the digital media frame 100.

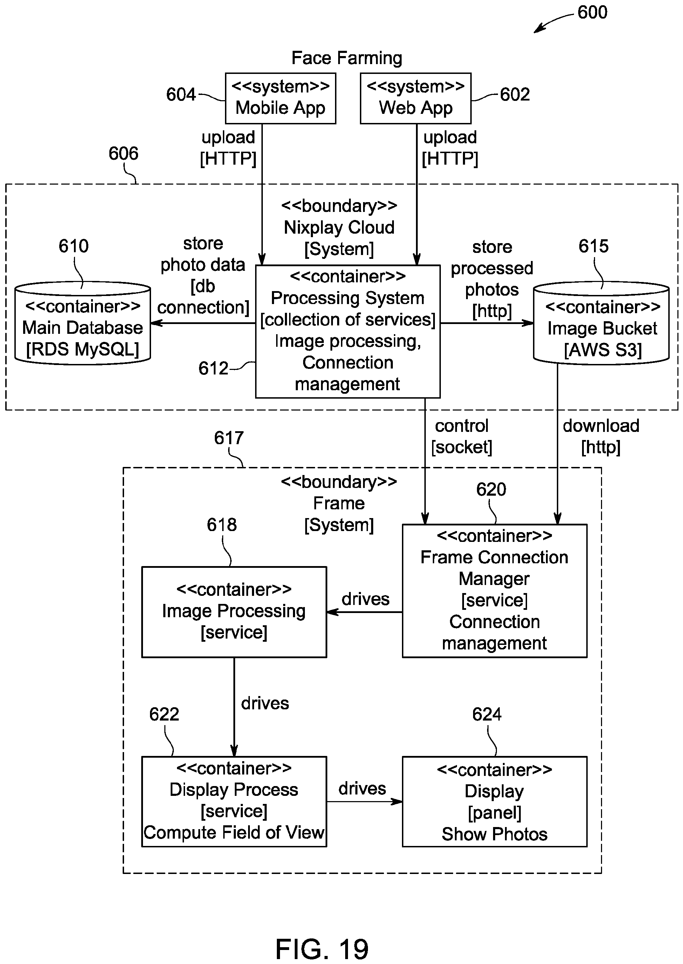

Referring to Figure 19 there is illustrated a system 600 for configuring a field of view of a digital media frame. In the exemplary example, the system 600 is a cloud based architecture. A user may interface with the system 600 using a web application 602 or a mobile phone application 604. A user may upload photographs to the cloud 606 via the web application 602 or the mobile phone application 604. A processing module 612 is provided on the cloud 606 and is configured for image processing and connectivity management. The uploaded images to the cloud 602 may be stored in a raw image database 610. The digital media frame 617 comprises a connection manager 620 which is operable for communication with the processing module 612 on the cloud 602. An image processing application 618 is provided on the digital media frame 617 which may be configured to implement the algorithm as illustrated in the flow chart of Figure 8. A display process module 622 is configured to compute the field of view. The processed image is displayed on a display 624. Once the image has been processed it may be uploaded from the digital media frame 617 to the cloud 606 and stored in a processed image database 615.

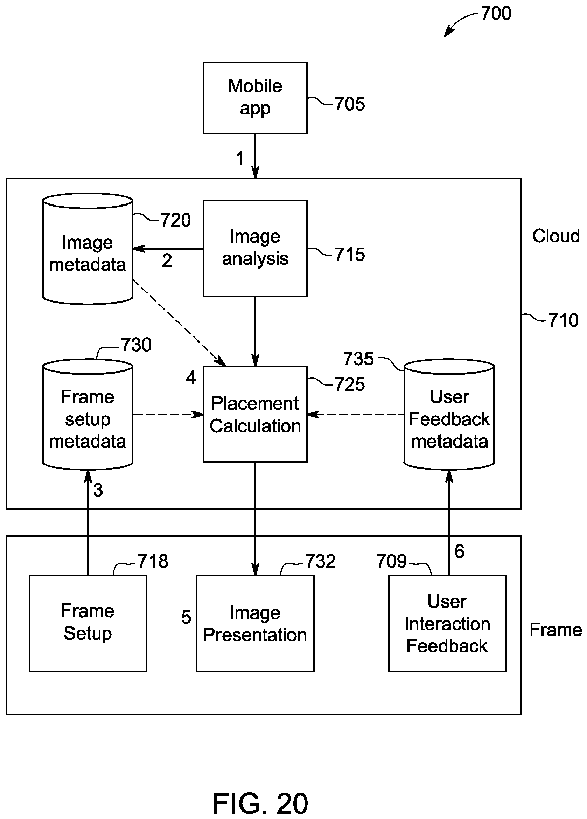

Referring to Figure 20 there is illustrated an exemplary image processing system 700 which is also in accordance with the present teaching. A user uploads a photograph using a mobile device 705 to a processing platform 710 on the cloud, step 1. The processing platform 710 is operable for communication with a digital media frame 712 which operates substantially similar to the digital media frames 100, 200, 300, 400, and 500 which have been previously described. The processing platform 710 has an image analysis module 715 configured to analyse the uploaded photograph to identify characteristic of the image data contained in the photograph. For example, the image analysis module 715 may identify if the photograph contains a single person, whether the layout of photograph is portrait, and if the coordinates of the person's face is located in an upper third region of the field of view, step 2. The characteristics of the photograph which are identified by the image analysis module 715 are stored as metadata in an image metadata database 720. A placement calculation module 725 is configured to identify frame setup characteristics of the digital media frame 712. The placement calculation module 725 communicates with the digital media frame 712 for interrogating the digital media 712 for extracting information about its setup, step 3. The frame setup information of the digital media frame 712 is stored locally in memory 718.The placement calculation module 725 may acquire the frame setup information from memory 718 and store it on the cloud in a frame setup database 730. For example, the placement calculation module 725 may determine whether the digital media frame 712 is a landscape frame and/or whether it has 'fit to screen mode' enabled. Similarly, other characteristics about the digital media frame 712 may be extracted from memory 718 of the digital media frame 712 and stored in the frame setup database 730 on the cloud 710 as frame setup metadata.

The placement calculation module 725 is configured to determine the optimum location where the image should be placed in the field of view of the digital media frame 712 such that the face of the person would be located in an optimum display location on the screen in a similar manner as described with reference to Figure 5. The image is then displayed on the visual display 732 of the digital media frame in accordance with the determined optimum location, step 5.

A user interface 709 of the digital media frame 712 allows the user to select display preferences. For example, the user can adjust the position of the displayed photograph to a location other than the determined optimum location, step 6. The user selected display preferences may be stored on the cloud in a user feedback database 735 as metadata which can be accessed by the placement calculation module 725 and used for determining optimum locations of images which are subsequently up loaded to the processing platform 710. The user interface may be a remote control, touchscreen, keypad, or the like.

The image processing system 700 may also be configured to process group photographs. In this scenario, the image analysis module 715 is configured to analyse the uploaded photograph similarly to step 2 as previously described in order to identify characteristic of the image data contained in the photograph. For example, the image analysis module 715 may identify if the photograph contains a group of people, whether the layout of photograph is landscape, and if the main body of faces of the group is located at particular region of the photograph, for example, on the right/left sides of the photograph. The placement calculation module 725 may acquire the frame setup information from memory 718 and store it on the cloud in a frame setup database 730 similarly to step 3 as previously described. For example, the placement calculation module 725 may determine whether the digital media frame 712 is a portrait frame and/or whether it has 'fit to screen mode' enabled. The placement calculation module 725 may be configured to determine the optimum location where the image should be placed in the field of view of the digital media frame 712 such that the faces of the group are located in an optimum display location in a similar manner as described with reference to Figure 12. The user can adjust the position of the displayed photograph to a location other than the determined optimum location in a similar manner as previously described with reference to step 6. The user selected display preferences may be stored on the cloud in a user feedback database 735 as metadata which can be accessed by the placement calculation module 725 and used for determining optimum locations of group based images which are subsequently up loaded to the processing platform 710

The image processing system 700 may also be configured to process photographs of horizons. In this scenario, the image analysis module 715 is configured to analyse the uploaded photograph similarly to step 2 as previously described in order to identify characteristic of the image data contained in the photograph. For example, the image analysis module 715 may identify that the uploaded photograph does not contain people, is of portrait layout, and identify the location of a horizon. The placement calculation module 725 may acquire the frame setup information from memory 718 and store it on the cloud in a frame setup database 730 similarly to step 3 as previously described. For example, the placement calculation module 725 may determine whether the digital media frame 712 is a landscape frame and/or whether it has 'fit to screen mode' enabled. The placement calculation module 725 may be configured to determine the optimum location where the image of the horizon should be placed in the field of view of the digital media frame 712 such that the horizon is located in an optimum display location in a similar manner as described with reference to Figure 17c. The user can adjust the position of the displayed photograph to a location other than the determined optimum location in a similar manner as previously described with reference to step 6. The user selected display preferences may be stored on the cloud in a user feedback database 735 as metadata which can be accessed by the placement calculation module 725 and used for determining optimum locations of horizon based images which are subsequently up loaded to the processing platform 710.

The image processing system 700 may also be configured to process photographs of animals. In this scenario, the image analysis module 715 is configured to analyse the uploaded photograph similarly to step 2 as previously described in order to identify characteristic of the image data contained in the photograph. For example, the image analysis module 715 may identify that the uploaded photograph contains an animal such as a cat, whether the layout of photograph is landscape/portrait, and if the image of the cat is located in an upper third of photograph. The placement calculation module 725 may acquire the frame setup information from memory 718 and store it on the cloud in a frame setup database 730 similarly to step 3 as previously described. For example, the placement calculation module 725 may determine whether the digital media frame 712 is a landscape frame and/or whether it has 'fit to screen mode' enabled. The placement calculation module 725 may be configured to determine the optimum location where the image of the cat should be placed in the field of view of the digital media frame 712 such that the cat is located in an optimum display location in a similar manner as described with reference to Figure 18c. The user can adjust the position of the displayed photograph to a location other than the determined optimum location in a similar manner as previously described with reference to step 6. The user selected display preferences may be stored on the cloud in a user feedback database 735 as metadata which can be accessed by the placement calculation module 725 and used for determining optimum locations of animal based images which are subsequently up loaded to the processing platform 710.

The image processing system 700 may also be configured to implement a tile mode similarly to that described with reference to Figure 15. In this scenario, the placement calculation module 725 may acquire the frame setup information from memory 718 and store it on the cloud in a frame setup database 730 similarly to step 3 as previously described. For example, the placement calculation module 725 may determine whether it is a portrait frame, has a tile mode of operation, if the previous photograph had a portrait layout, and if the previous photograph had an image of a person's face in an upper third region of the photograph. The placement calculation module 725 may be configured to determine placement of the photographs in tiles such that facial data of previous photographs are not occluded by subsequently placed tiles in a similar manner similarly as described with reference to Figure 15. The user can adjust the position of the displayed photograph to a location other than the determined optimum location in a similar manner as previously described with reference to step 6. The user selected display preferences may be stored on the cloud in a user feedback database 735 as metadata which can be accessed by the placement calculation module 725 and used for determining optimum locations of images which are subsequently up loaded to the processing platform 710 for displaying in tile mode.

The image processing system 700 may also be configured to process night scene photographs. In this scenario, the image analysis module 715 is configured to analyse the uploaded photograph similarly to step 2 as previously described in order to identify characteristic of the image data contained in the photograph. For example, the image analysis module 715 may identify that the uploaded photograph contains an image of a night scene, that the photograph has a landscape/portrait layout, and if the photographs contains faces of one or more individuals. The placement calculation module 725 may acquire the frame setup information from memory 718 and store it on the cloud in a frame setup database 730 similarly to step 3 as previously described. For example, the placement calculation module 725 may determine whether the digital media frame 712 is a landscape/portrait frame. The placement calculation module 725 may determine external environmental factors such as an indication of room lighting levels which may indicate low or high brightness. The placement calculation module 725 may be configured to prioritise the display of photographs containing images of night scenes over images containing daytime scenes or vice versa based on the lighting level of the room where the digital media frame is located. It will be appreciated that other external environmental factors may be determined such as noise volume level, motion detection, or time at the display location for determining which images to prioritise for display.

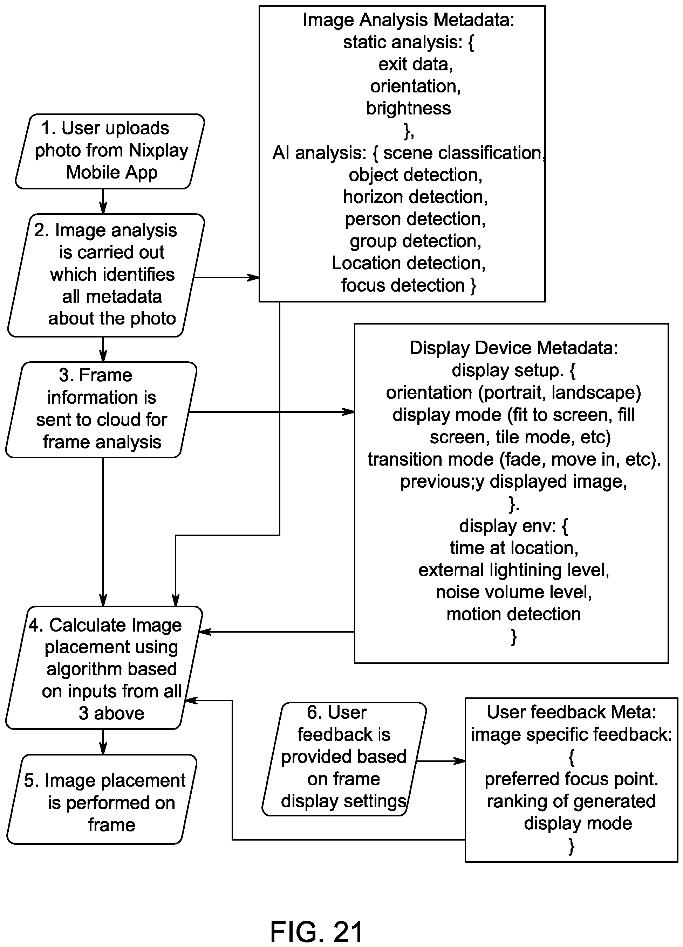

Referring to Figure 21 there is illustrated another exemplary method implemented using the image processing system 700. A user may upload a photograph to the processing platform 710 on the cloud using a client device such as a smart phone, step 1. The image analysis module 715 analyses the photograph to identify characteristic of the photograph such as but not limited to classification, exif data, object detection, etc., step 2. The placement module 725 determines the frame setup of the digital media frame 712 by using frame setup metadata which has been previously stored in the frame setup database 730 on the cloud and/or by extracting frame setup data from the memory 718 that is stored locally on the digital media 712. For example, the frame setup data may include a display mode, orientation, characteristics of previous photographs, etc. step 3. The placement calculation module 725 is configured to perform a placement calculation based on at least one of image metadata, frame setup metadata and user feedback metadata, or any combination there of, step 4. The photograph is then displayed on the visual display 732 of the digital media frame 712 based on the placement calculation output from the placement module 725. The user can select display preference if desired using the user interface of the digital media frame 712 which can override the placement calculation such that the image is displayed in a preferred way based on the user preference selection(s). The preferences selected by the user may be stored as meta data in the user feedback database 735 such that any future placement calculations performed by the placement calculation module 725 may take account of historic user selections.

It will be understood that while exemplary features of a digital media frame has been described, that such an arrangement is not to be construed as limiting the invention to such features. The method for detecting characteristics in the digital image may be implemented in software, firmware, hardware, or a combination thereof. In one mode, the method is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s) may be programmed to perform the functions of the method for configuring a field of view of a digital media frame. The processor(s) is a hardware device for executing software, particularly software stored in memory. Processor(s) can be any custom made or commercially available processor, a primary processing unit (CPU), an auxiliary processor among several processors associated with a computer, a semiconductor based microprocessor (in the form of a microchip or chip set), a macro-processor, or generally any device for executing software instructions.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by processor(s).

The software in memory may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present disclosure may include components provided as a source program, executable program (object code), script, or any other entity comprising a set of instructions to be performed. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When the method is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this disclosure, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any method descriptions or blocks in the Figures, should be understood as representing modules, segments, or portions of code which include one or more executable instructions for implementing specific logical functions or steps in the process, as would be understood by those having ordinary skill in the art.

The above detailed description of embodiments of the disclosure is not intended to be exhaustive or to limit the disclosure to the exact form disclosed. While specific examples for the disclosure are described above for illustrative purposes, those skilled in the relevant art will recognize various modifications are possible within the scope of the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or sub-combinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

Advantageous features of the present disclosure are detailed in the following numbered clauses:
1. A method for configuring a field of view of a digital media frame; the method comprising
   analysing a digital image to identify at least one first portion of the digital image having a first predetermined characteristic;
   determining an optimum location within the field of view; and
   positioning the identified at least one first portion of the digital image within the optimum location.
2. A method of clause 1; wherein in at least one display mode of the digital media frame at least one second portion of the digital image is located outside the field of view.
3. A method of clause 1 or 2; further comprising cropping the at least one second portion while retaining the at least one first portion.
4. A method of any of clauses 1 to 3; further comprising applying an image processing algorithm to the digital image to identify the first predetermined characteristic.
5. A method of clause 4; wherein the image processing algorithm is configured for facial detection.
6. A method of clause 5; wherein the first predetermined characteristic comprises facial data.
7. A method of clause 6; wherein the facial data comprises at least one of eyes, mouth, hair, ears, and nose.
8. A method of any of clauses 1 to 7; wherein the optimum location is selected with respect to at least one set of coordinates within the field of view.
9. A method of clause 8; wherein the at least one set of coordinates corresponds to the centre of the field of view.
10. A method of clause 9; wherein the at least first portion is positioned with respect to the centre of the field of view.
11. A method of any of clauses 1 to 10, further comprising applying at least one predefined display protocol.
12. A method of clause 11; wherein the at least one predefined display protocol comprises a group protocol wherein a plurality of faces are identified in a digital image; and the optimum position is selected with respect to the identified plurality of faces.
13. A method of clause 12; wherein a centre of the group of faces is identified and the photograph is displayed such that the centre of the group of faces corresponding to the centre of the field of view.
14. A method of clause 12 or 13; wherein the centre of the group of faces is identified using a triangulation technique.
15. A method as detailed in clause 11; wherein the at least one predefined display protocol provides instructions for displaying a series of photographs on tile spaces within the field of view.
16. A method as detailed in clause 15; wherein two or more photographs are displayed on the tile spaces without overlapping a portion of one photograph containing facial data with a portion of another photograph to minimise the occlusion of faces.
17. A digital media frame comprising:
   a processor;
   a visual display screen;
   memory comprising instructions which, when executed, cause the processor to analyse a digital image to identify at least one first portion of the
   digital image having a first predetermined characteristic;
      determine an optimum location within the field of view; and
      position the identified at least one first portion of the digital image within the optimum location.
18. The digital media frame of clause 17; wherein the digital media frame comprises at least two display modes.
19. The digital media frame of clause 18; wherein one of the display modes is a portrait mode and the other one is a landscape mode.
20. The digital media frame of clause 19; wherein in the landscape mode at least one second portion of the digital image is located outside the field of view.
21. The digital media frame of clause 20; wherein the at least one second portion is cropped while the at least one first portion is retained.
22. The digital media frame of clause 17; wherein the processor is configured to apply an image processing algorithm to the digital image to identify the first predetermined characteristic.
23. The digital media frame of clause 22; wherein the image processing algorithm is configured for facial detection.
24. A networked device comprising:
   a communication module;
   a processor;
   a visual display screen;
   memory comprising instructions which, when executed, cause the processor to analyse a digital image to identify at least one first portion of the
   digital image having a first predetermined characteristic;
      determine an optimum location within the field of view; and
      position the identified at least one first portion of the digital image within the optimum location.
25. A computer program product configuring a field of view on a digital media frame, the computer program product disposed on a non-transitory computer readable medium, the computer program product including computer program instructions that, when executed, cause a computer to carry out the steps of:
   analysing a digital image to identify at least one first portion of the digital image having a first predetermined characteristic;
   determining an optimum location within the field of view; and
   positioning the identified at least one first portion of the digital image within the optimum location.
26. A digital media frame platform comprising:
   an image processing module provided on a cloud for identifying at least one first portion of a uploaded digital image having a predetermined characteristic;
   a placement calculation module provided on the cloud for determining an optimum location within a field of view;
   wherein the placement calculation module is in communication with a digital media frame for controlling a visual display of the digital media frame such that the identified at least one first portion of the digital image is positioned within the optimum location.
27. A digital media frame platform as detailed in clause 26 wherein the identified predetermined characteristics are stored as characteristic metadata on the cloud and is accessible by the placement calculation module for calculating the optimum location.
28. A digital media frame platform as detailed in clauses 26 or 27; wherein the placement calculation module is configured to identify setup information of the digital media frame.
29. A digital media frame platform as detailed in clause 28; wherein the placement calculation module communicates with the digital media frame for extracting setup information stored locally on the digital media frame.
30. A digital media frame platform as detailed in clause 29; wherein the setup information is stored on the cloud as setup metadata and is accessible by the placement calculation module for calculating the optimum location.
31. A digital media frame platform as detailed in clause 30; wherein a user interface allows a user to select display preferences which are stored as user feedback metadata and stored on the cloud; the user feedback metadata is accessible by the placement calculation module for calculating the optimum location.
32. A digital media frame platform as detailed in any of clauses 26 to 31; wherein the image analysis module is configured to identify night scene characteristics.
33. A digital media frame platform as detailed in any of clauses 26 to 31; wherein the placement calculation module is configured to determine external environmental factors obtained from the setup information of the digital media frame.
34. A digital media frame platform as detailed in clause 33; wherein the external environmental factors comprises room light level data.
35. A digital media frame platform as detailed in clause 34; wherein the placement calculation module is configured to prioritise the display of image data containing a night scene over image data containing a daytime scene or vice versa based on the room light level data.

## Claims

1. A method for configuring a field of view of a digital media frame, the method comprising:
analysing a digital image to identify at least one first portion of the digital image having a first predetermined characteristic;
determining an optimum location within the field of view; and
positioning the identified at least one first portion of the digital image within the optimum location.

2. A method of claim 1, wherein in at least one display mode of the digital media frame at least one second portion of the digital image is located outside the field of view.

3. A method of claim 2, further comprising cropping the at least one second portion while retaining the at least one first portion.

4. A method of any preceding claim, further comprising applying an image processing algorithm to the digital image to identify the first predetermined characteristic.

5. A method of claim 4, wherein the image processing algorithm is configured for facial detection.

6. A method of claim 5, wherein the first predetermined characteristic comprises facial data; and optionally, wherein the facial data comprises at least one of eyes, mouth, hair, ears, and nose.

7. A method of any preceding claim, wherein the optimum location is selected with respect to at least one set of coordinates within the field of view; and optionally, the at least one set of coordinates corresponds to the centre of the field of view; and optionally, the at least first portion is positioned with respect to the centre of the field of view.

8. A method of any preceding claim, further comprising applying at least one predefined display protocol; and optionally, the at least one predefined display protocol comprises a group protocol wherein a plurality of faces are identified in a digital image, and the optimum position is selected with respect to the identified plurality of faces; and optionally, wherein a centre of the group of faces is identified and the photograph is displayed such that the centre of the group of faces corresponding to the centre of the field of view; and optionally, wherein the centre of the group of faces is identified using a triangulation technique.

9. A method as claimed in claim 8, wherein the at least one predefined display protocol provides instructions for displaying a series of photographs on tile spaces within the field of view; and optionally, wherein two or more photographs are displayed on the tile spaces without overlapping a portion of one photograph containing facial data with a portion of another photograph to minimise the occlusion of faces.

10. A digital media frame comprising:
a processor;
a visual display screen;
memory comprising instructions which, when executed, cause the processor to:
analyse a digital image to identify at least one first portion of the digital image having a first predetermined characteristic;
determine an optimum location within the field of view; and
position the identified at least one first portion of the digital image within the optimum location.

11. The digital media frame of claim 10, wherein the digital media frame comprises at least two display modes; and optionally, wherein one of the display modes is a portrait mode and the other one is a landscape mode; and optionally, wherein in the landscape mode at least one second portion of the digital image is located outside the field of view; and optionally, wherein the at least one second portion is cropped while the at least one first portion is retained.

12. A digital media frame platform comprising:
an image processing module provided on a cloud for identifying at least one first portion of a uploaded digital image having a predetermined characteristic;
a placement calculation module provided on the cloud for determining an optimum location within a field of view;
wherein the placement calculation module is in communication with a digital media frame for controlling a visual display of the digital media frame such that the identified at least one first portion of the digital image is positioned within the optimum location.

13. A digital media frame platform as claimed in claim 12 wherein the identified predetermined characteristics are stored as characteristic metadata on the cloud and is accessible by the placement calculation module for calculating the optimum location.

14. A digital media frame platform as claimed in claim 12 or 13, wherein the placement calculation module is configured to identify setup information of the digital media frame; or wherein the placement calculation module communicates with the digital media frame for extracting setup information stored locally on the digital media frame.

15. A digital media frame platform as claimed in claim 14, wherein the setup information is stored on the cloud as setup metadata and is accessible by the placement calculation module for calculating the optimum location; and optionally, wherein a user interface allows a user to select display preferences which are stored as user feedback metadata and stored on the cloud, the user feedback metadata is accessible by the placement calculation module for calculating the optimum location; and optionally, wherein the image analysis module is configured to identify night scene characteristics; and /or wherein the placement calculation module is configured to determine external environmental factors obtained from the setup information of the digital media frame; and optionally, wherein the external environmental factors comprises room light level data; and optionally, wherein the placement calculation module is configured to prioritise the display of image data containing a night scene over image data containing a daytime scene or vice versa based on the room light level data.
